## Europäisches Patentamt
## European Patent Office
## Office européen des brevets

(11) Veröffentlichungsnummer: **0 226 946**
**B1**

(12) **EUROPÄISCHE PATENTSCHRIFT**

(45) Veröffentlichungstag der Patentschrift: **04.04.90**

(51) Int. Cl.⁵: **B 29 C 43/30, B 29 C 43/48**

(21) Anmeldenummer: **86117176.7**

(22) Anmeldetag: **10.12.86**

(54) **Verfahren zur kontinuierlichen Herstellung von Bahnenware für das Bauwesen.**

(30) Priorität: **27.12.85 DE 3546184**

(43) Veröffentlichungstag der Anmeldung:
**01.07.87 Patentblatt 87/27**

(45) Bekanntmachung des Hinweises auf die Patenterteilung:
**04.04.90 Patentblatt 90/14**

(84) Benannte Vertragsstaaten:
**AT BE CH DE ES FR GB IT LI LU NL SE**

(56) Entgegenhaltungen:
**DE-A-2 423 661
DE-B-1 279 321
DE-B-1 294 648
US-A-3 279 968
US-A-3 381 067**

(73) Patentinhaber: **Hüls Troisdorf Aktiengesellschaft
Postfach 11 65
D-5210 Troisdorf (DE)**
(84) **AT BE CH DE ES FR GB IT LI LU NL SE**

(73) Patentinhaber: **HERMANN BERSTORFF
MASCHINENBAU GMBH
Postfach 629
D-3000 Hannover 1 (DE)**
(84) **DE FR GB IT NL SE**

(72) Erfinder: **Allner, Kurt, Dr.
Rembrandtstrasse 61
D-5210 Troisdorf-Eschmar (DE)**
Erfinder: **Brinkmann, Hans
Stresemannstrasse 2
D-5210 Troisdorf (DE)**
Erfinder: **Schulte, Herbert
Ziethenstrasse 22
D-5210 Troisdorf-Oberlar (DE)**
Erfinder: **Schulze-Kadelbach, Roland, Dr.
Am Waldrand 20
D-5206 Neunkirchen-Seelscheid 1 (DE)**
Die weiteren Erfinder haben auf ihre Nennung verzichtet

Courier Press, Leamington Spa, England.

**Beschreibung**

Die Erfindung betrifft ein Verfahren zur kontinuierlichen Herstellung von Bahnenware für das Bauwesen gemäß dem Oberbegriff des Anspruchs 1.

Als Bahnenwaren für das Bauwesen im Sinne dieser Erfindung werden insbesondere Fußboden- und Wandbeläge und insbesondere solche aus thermoplastischen Kunststoffen verstanden. Bevorzugtes Einsatzgebiet ist die Herstellung richtungsfrei gemusterter Fußboden- und Wandbeläge auf der Basis von PVC.

Formstücke im Sinne dieser Erfindung sind insbesondere Schnitzel, Krümel, Abschnitte, Stücke oder Chips aus geeigneten Ausgangsmaterialien.

Aus der DE—B2—19 28 405 ist ein Verfahren zur Herstellung in sich gemusterter Fußbodenbeläge bekannt, bei dem ein Gemisch von unter sich verschiedenfarbigen Schnitzeln thermoplastischer Kunststoffe zu einer Bahn ausgewalzt und anschließend mit weiteren Bahnen vereinigt und kalandriert wird. Bei diesen Verfahren können nur Bahnen geringer Dicke hergestellt werden, da bei größeren Dicken durch Lufteinschlüsse Lunker auftreten. Weiterhin führen Walz- und Kalandrierverfahrensschritte grundsätzlich zu einer gerichteten Struktur der entstehenden Muster.

Aus der DE—PS 637 144 ist ein Verfahren zur Herstellung von Fußbodenbelägen bekannt, bei dem eine Kautschukmischung o.dgl. zwischen zwei umlaufenden Bändern um eine Vulkanisationstrommel und Kühltrommeln geführt wird, wobei drei Trommeln in S-Form angeordnet sind, so daß der Druck, der von den Bändern auf den Belag ausgeübt wird, von Beginn der Heizperiode bis zum Ende der Kühlphase annähernd konstant bleibt. Diese Schrift gibt jedoch keine Anregung für ein Verfahren oder eine Vorrichtung zur Herstellung von Bahnenware aus thermoplastischen Kunststoffen und hat dementsprechend keinen Einfluß auf die technische Entwicklung auf diesem Gebiet ausgeübt.

Aus der DE—C2—30 31 839 ist ein Verfahren zur Herstellung von gemusterten Bahnen aus thermoplastischem Kunststoff bekannt, bei dem Teilchen, z.B. Schnitzel, Krümel, Abschnitte, Stücke oder Chips kontinuierlich auf ein Trägerband zu einer Rohschicht aufgeschüttet werden, die Rohschicht vorgewärmt und anschließend unter Anwendung von Druck und Wärme quasi-kontinuierlich verpreßt und verschweißt und anschließend unter Druckeinwirkung abgekühlt wird. Dabei wird ein Druck von ca. 10 bis 60 bar periodisch von einer (Doppel-) Schwingpresse aufgebracht, alternierend dazu findet der Materialtransport schrittweise und quasi-kontinuierlich statt. Die periodische Arbeitsweise sollte das Auftreten von Lunkern in der so hergestellten Bahnenware vermeiden. Nachteil dieses Verfahrens ist es, daß nur eine geringe Arbeitsgeschwindigkeit von maximal 2 m/min erreicht werden kann. Bei großen Belagsdicken und bei Verwendung größerer Formstücke traten trotz Verwendung des periodischen Pressens Lunker im Inneren der Bahnen auf. Bedingt durch den notwendigen hohen Druck und durch die periodische Druckeinwirkung waren teure und aufwendige Konstruktionen notwendig. Weiterhin bedingte dieses Arbeitsverfahren hohe Temperaturen, um lunkerfreie Arbeitsergebnisse zu erzielen. Insbesondere bei dicken Schichten war ein Verwaschen der Konturen der eingesetzten Teilchen in der fertigen Bahn zu beobachten.

Aus der DE—A 1—26 36 170 ist eine Doppelbandpresse bekannt, bei der zwei endlose, angetriebene Metallbänder so über Umlenkwalzen geführt werden, daß zwischen den Metallbändern eine bandförmige Schicht eines zu behandelnden Materials zunächst über eine geheizte und anschließend eine gekühlte Walze geführt wird. Dabei wird auf die Materialbahn ständig ein annähernd konstanter Druck ausgeübt. Ein Hinweis für die Eignung dieser Doppelbandpresse für das erfindungsgemäße Verfahren findet sich in dieser Schrift nicht.

Aufgabe der vorliegenden Erfindung ist es, ein kontinuierliches Verfahren zur Herstellung von Bahnenware für das Bauwesen gemäß dem Oberbegriff des Anspruchs 1 so zu verbessern, daß auch bei höheren Fertigungsgeschwindigkeiten keine Lunker auftreten, daß auch unter ungünstigen Voraussetzungen (große Stückelung der Chips, hohe Arbeitsgeschwindigkeiten etc.) scharf abgegrenzte Begrenzungslinien der eingesetzten Formstücke erreichbar sind. Das Verfahren soll dabei mit einfachen konstruktiven Maßnahmen zu verwirklichen sein.

Gemäß der Erfindung wird diese Aufgabe durch die kennzeichnendem Merkmale des Anspruchs 1 gelöst.

Als Formstücke können dabei Schnitzel, Krümel, Abschnitte, Stücke oder Chips, insbesondere aus thermoplastischem Kunststoff eingesetzt werden. Geeignete thermoplastische Kunststoffe sind insbesondere Vinylpolymerisate und/oder Copolymer des Vinylchlorids, wie beispielsweise Polyvinylchlorid, enthaltend Weichmacher sowie ggf. weitere Hilfsstoffe, wie Stabilisatoren, Pigmente, Füllstoffe. Es können auch Mischungen von Teilchen aus unterschiedlichen thermoplastischen Kunststoffen oder aber auch Kunststoffmischungen eingesetzt werden, wobei thermoplastische Kunststoffe wie Acrylate, Polyester, Ethylen-Vinylacetat zur Anwendung kommen.

Die Formstücke können jeweils unterschiedliche Farben aufweisen und/oder vorzugsweise in sich gemustert sein.

Besonders eignen sich Formstücke, die durch Strangpressen hergestellt werden sowie Formstücke, die durch Ausstanzen oder Abschlagen aus Roh-Walzfellen hergestellt werden. Als bevorzugte Formen kommen dabei Kugeln (⌀ von 2 bis 30 mm), Würfel (2 bis 30 mm Kantenlänge), Scheiben einer Dicke von 1 bis 5 mm mit rechteckiger oder runder Form mit Längen von 2 bis 60 mm in Betracht.

Die diversen Formstücke können dabei einzeln, bevorzugt aber gemischt aus zwei bis vier Sorten eingesetzt werden.

Die Formstücke werden im kalten oder vorgewärmten/noch warmen Zustand mit Hilfe einer Schüttvorrichtung auf ein Transportband zu einer Schicht mit weitgehend konstanter Schichthöhe geschüttet. Die Schichthöhe sollte dabei vorzugsweise dem 1,5 bis 3-fachen der durchschnittlichen Abmessungen der Formstücke entsprechen. Gute Ergebnisse werden mit Schütthöhen von 8 mm bis 50 mm, insbesondere mit 10 bis 20 mm erhalten.

Die Formstückschicht kann anschließend vorteilhaft, z.B. mittels eines Rakels, einer Schüttelvorrichtung, oder einer Stachelwalze, mechanisch egalisiert und vorverdichtet werden.

Die Formstückschicht wird anschließend vorgewärmt. Als Vorwärmtemperatur reichen bei geringer Schütthöhe und entsprechender Auslegung der sich anschließenden Preßeinrichtung 80°C aus, vorteilhaft wird die Formstückschicht jedoch bei höherer Temperatur vorgesintert. Dieses erfolgt bei einer mittleren Temperatur ab ca. 130°C, vorzugsweise sollte am Ende der Sinterstrecke eine mittlere Temperatur der zusammenhängenden Bahn von 150°C bis 170°C erreicht werden. Eine gleichmäßige Erwärmung bis in die Mitte der Formstückschicht ist vorteilhaft. Temperaturen oberhalb 180°C führen im allgemeinen nicht zu besseren Arbeitsergebnissen.

Im Anschluß an das Vorwärmen bzw. Vorsintern der Formstückschicht wird diese kontinuierlich unter weitgehend konstanter und gleichmäßiger Druckeinwirkung im thermoplastischen Zustand zu einer homogenen Bahn verdichtet und anschließend unter Beibehaltung der Druckeinwirkung abgekühlt. Es hat sich überraschend herausgestellt, daß ein gleichmäßiger Preßvorgang dem langsam pulsierenden Druckeinfluß, z.B. gemäß dem Verfahren nach der DE—C2—30 31 839, überlegen ist. Unerwartet zeigen sich bei dem erfindungsgemäßen Verfahren auch beim Einsatz großer Formstücke und bei hohen Arbeitsgeschwindigkeiten von mehr als 8 m/min keine Lunker.

Während des Verpressens wird die vorgewärmte bzw. vorgesinterte Bahn in der Preßeinrichtung, vorzugsweise beidseitig, erwärmt auf Temperaturen im Bereich von 170°C bis 220°C, vorzugsweise auf Temperaturen von 175°C bis 185°C. Die Einstellung der Temperatur ist dabei abhängig von der Verweilzeit der Bahn in der Preßeinrichtung, von der Dicke der Bahn, vom Material der Formstücke und vom ausgeübten Preßdruck. Überraschend hat sich herausgestellt, daß ein Preßdruck von ca. 3 bar bis 9 bar zu hervorragenden Ergebnissen führt. Vorzugsweise liegt der Druck bei 5 bar bis 7 bar. Als günstige Verweilzeiten haben sich 0,3 min bis 1,5 min, bevorzugt 0,5 min bis 1 min herausgestellt. Dabei konnten Produktionsgeschwindigkeiten von mehr als 8 m/min erzielt werden.

Erfindungsgemäß wird auf die Bahn während des Pressens und während der Abkühlung ein jeweils weitgehend gleichmäßiger Druck ausgeübt. Entscheidend ist dabei, daß der Druck zu keinem Zeitpunkt unter einen Mindestwert von ca. 1,5 bar bis 2 bar (absolut) fällt.

Die Abkühlung unter Druckeinwirkung sollte zumindest soweit erfolgen, daß die Temperatur der Bahn unter die Erweichungstemperatur des eingesetzten Kunststoffmaterials liegt. Vorteilhaft erfolgt die Abkühlung bis auf Temperaturen von 70°C bis 90°C. Für einen optimalen Abzug der Bahn von den z.B. Stahlbändern der Preßeinrichtung haben sich Temperaturen von 65°C bis 75°C als günstig herausgestellt.

Die abgekühlte Bahn ist homogen und lunkerfrei, zeigt jedoch eine leicht verschmierte Struktur des Oberflächen-Designs. Es hat sich überraschend herausgestellt, daß diese Mischfarbenbildung und unscharfe Begrenzung der Konturen der eingesetzten Formstücke auf eine oberflächennahe Schicht begrenzt ist. Nach Entfernen einer Schicht von ca. 0,1 bis 0,5 mm, vorzugsweise 0,15 mm bis 0,25 mm, erscheint das Design äußerst scharf abgegrenzt und klar. Vorteilhaft ist dabei, daß die Struktur in allen Richtungen gleichmäßig erscheint, so daß die Produktionsrichtung auf dem Oberflächenbild nicht mehr erkennbar ist. Die Entfernung der oberflächennahen Schicht kann vorzugsweise mittels Schleifen erfolgen.

Nach dem Entfernen der oberflächennahen Schicht können noch weitere Arbeitschritte eingesetzt werden wie Spalten, Tempern, Polieren etc. Als Vorteilhaft hat sich herausgestellt, daß nach dem erfindungsgemäßen Verfahren hergestellte Bahnenwaren nur eine äußerst geringe Schrumpfneigung zeigen, so daß ein Tempern ggf. entfallen kann.

Eine vorteilhaft Vorrichtung zur Durchführung des erfindungsgemäßen Verfahrens ist in den Ansprüchen 12 bis 14 angegeben.

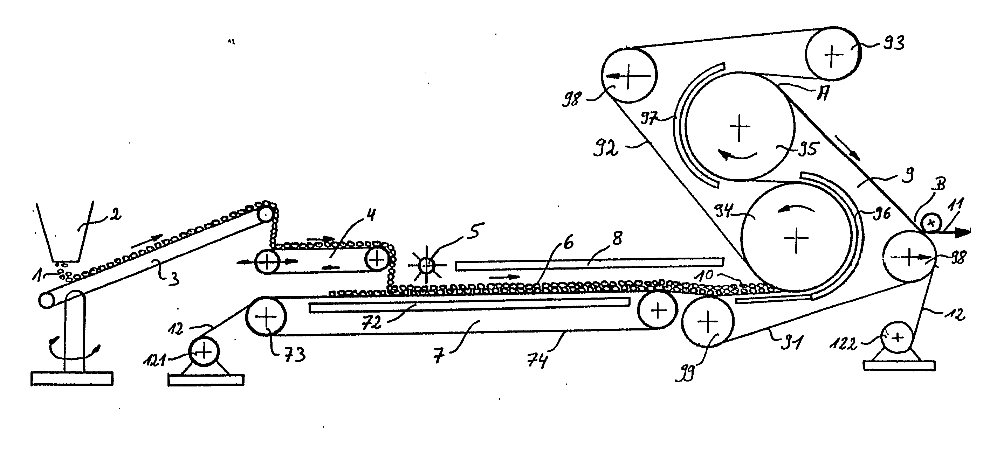

Ein Ausführungsbeispiel der Erfindung ist in der Zeichnung dargestellt und wird im folgenden näher beschrieben.

Es zeigt dabei die Figur eine Einrichtung zur Durchführung des erfindungsgemäßen Verfahrens.

Für ein erstes Versuchsbeispiel wurden in sich gemusterte Chips aus einem gewalzten Rohfell von ca. 2 mm Dicke in Kreisform mit 5 mm und 10 mm ∅ sowie in Rechteckform von 5 mm × 10 mm verwendet. Diese Formstücke 1 werden gemischt und mittels einer Aufgabevorrichtung 2 auf eine erste Fördereinrichtung 3 aufgegeben. Diese Fördereinrichtung besteht aus einem ca. 10 cm bis 20 cm breiten Förderband, des drehbar gelagert ist und Schwenkbewegungen über die Breite der folgenden Fördereinrichtung 4 ausführt. Diese zweite Fördereinrichtung 4 reserviert über eine Strecke von beispielsweise 0,5 m bis 1,5 m, um eine gleichmäßige Schüttung auf der kontinuierlichen Transportvorrichtung 7 zu erreichen. Mittels einer Stiftwalze 5 wird die Schüttung egalisiert und vorverdichtet. Die mittlere Schütthöhe beträgt im ersten Versuchsbeispiel ca. 2,5 mm. Das Metall-Förderband 74 der kontinuierlichen Transportvorrichtung 7 wurde durch eine Heizeinrichtung 72 und durch die Walze 73 beheizt auf eine Temperatur von ca. 180°C. Gleichzeitig wurde die Formstückschicht 6 mit einer Heizeinrichtung 8 mittels Strahlungswärme von oben erwärmt. Die Formstückschicht wurde dabei auf eine mittlere Temperatur von 160°C aufgeheizt, wobei die einzelnen Formstücke zu einer zusammenhängenden porösen Bahn vorgesintert wurden. Als Verdichtungs- und Kühlvorrichtung wurde eine Doppelbandpresse 9 verwendet mit einer Heiztrommel 94, einer Kühltrommel 95, einem Metallband 92, das von einer Umlenkwalze 93 angetrieben wurde, und einem durch die Kunststoffbahn 10 durch Reibschluß indirekt angetriebenen Metallband 91.

Die Zugspannungen der ca. 1,5 mm starken Metallbänder 91, 92 und damit die Drücke auf die Bahn in der Heizzone bzw. in der Kühlzone können in vorteilhafter Weise getrennt durch hydraulisches Verstellen der Walzen 98 geregelt oder gesteuert werden.

Im Ausführungsbeispiel wurde der Druck im Bereich der Heiztrommel 94 über das Metallband 91 auf ca. 6 bar (entspricht 7 bar absolut) eingestellt, der Druck im Bereich der Kühltrommel 95 betrug 3 bar (entspricht 4 bar absolut). Entscheidend ist, daß der Druck im Bereich der Kühltrommel nicht unter einen Wert von ca. 1,5 bar bis 2 bar (absolut) fällt, das sonst mit Lunkern zu rechnen ist. Höhere Drücke erfordern einen entsprechend hohen konstruktiven Aufwand.

Der Übergang zwischen der Heiztrommel 94 und der Kühltrommel 95 erfolgt zwar unter relativ geringem Druck, dieses ist jedoch, soweit die Zugspannung der Bänder 91, 92 noch genügend hoch ist, unkritisch. Die Durchmesser der Kühltrommel 95 und der Heiztrommel 94 betrug im Ausführungsbeispiel 630 mm bei einer Breite von jeweils 600 mm. Im ersten Versuchsbeispiel ergab sich eine Produktionsgeschwindigkeit von 2 m/min.

Beim ersten Versuchsbeispiel wurde ein Mitläuferband 12 über die Rolle 73 auf die kontinuierliche Transportvorrichtung 7 eingeführt. Dieses Mitläuferband 12 besteht aus dichtem Kevlar-Gewebe und wird von der Vorratsrolle 121 entnommen und nach dem Pressen von der Bahn 11 abgezogen und mit der Aufwickelrolle 122 aufgewickelt, um später erneut eingesetzt zu werden. Es ist auch möglich, das Mitläuferband direkt zur Umlenkrolle 73 zurückzuführen. Weiterhin kann ggf. auch ein zweites Mitläuferband von oben zwischen die vorgewärmte bzw. vorgesinterte Bahn 10 und das Metallband 92 der Doppelbandpresse 9 eingeführt werden.

Die Heizung im Bereich der Heiztrommel 94 erfolgt über die ölbeheizte Heiztrommel 94 mit einer Öl- Vorlauftemperatur von 195°C, über das vorgeheizte 9 und 91 sowie über die Heizeinrichtung 96 über Wärmestrahlung. Das Band 91 wird dabei über die beheizte Walze 99 auf eine Temperatur von 185°C temperiert.

Die maximale Temperatur der Bahn ergab sich mit ca. 180°C im Übergangsbereich zwischen der Heiztrommel 94 und der Kühltrommel 95.

Die Kühltrommel 95 ist von innen wassergekühlt. Zusätzlich wird dieser Bereich von außen durch die Kühleinrichtung 97 z.B. mittels Kaltluft gekühlt. Die mittlere Temperatur der Bahn betrug am Ende der Kühlstrecke an der Stelle A ca. 75°C, am Abzug der Bahn vom Stahlband 91 (Stelle B) ca. 70°C.

Die Dicke der Bahn wurde vor dem Eintritt in die Doppelbandpresse 9 mit ca. 2,4 mm bestimmt, beim Abziehen der Bahn 11 (Stelle B) betrug diese ca. 2,2 mm. die Oberflächenstruktur war leicht verwaschen und unscharf.

Mittels einer (nicht dargestellten) Schleifeinrichtung wird die abgekühlte Bahn 11 einseitig auf ein Endmaß von 2 mm abgeschliffen. Dabei ergab sich ein scharf abgegrenztes, richtungsfreies Muster.

In einem zweiten Ausführungsbeispiel werden Formstücke mit einer mittleren charakteristischen Abmessung von 2 bis 5 mm zu einer Formstückschicht 6 mit einer mittleren Schütthöhe von 8 mm aufgeschüttet und wie im ersten Versuchsbeispiel behandelt. Die Dicke der Bahn betrug nach dem Vorsintern ca. 7 mm, die Produktionsgeschwindigkeit 1 m/min.

Die verdichtete Bahn 11 wies eine Dicke von 5,5 mm auf. Diese wurde beidseitig um je 0,25 mm abgeschliffen. Die fertige Bahn mit 5 mm Dicke zeigte eine klare Strukturierung und ein richtungsfreies Muster. Mit einer weiteren Vorrichtung mit Trommeldurchmessern von 2000 mm wird ein drittes Ausführungsbeispiel mit sonst gleichen Versuchsbedingungen wie im ersten Beispiel durchgeführt. Die Produktionsgeschwindigkeit beträgt dabei 6 m/min, die fertige Bahn von 2,2 mm vor dem Schleifen bzw. 2 mm nach dem Schleifen ergibt das gleiche Muster wie im ersten Ausführungsbeispiel.

In einem vierten Ausführungsbeispiel wird eine Doppelbandpresse mit Trommeldurchmessern von 2000 mm verwendet, wobei die gleichen Formstücke wie im zweiten Ausführungsbeispiel und die gleiche Schütthöhe wie in diesem Beispiel eingesetzt werden. Mit Ausnahme der Produktionsgeschwindigkeit, die in diesem Beispiel 3 m/min beträgt, blieben alle weiteren Verfahrensbedingungen und Ergebnisse identisch mit denen des Versuchs 2.

Eine Verwendung entsprechend größerer Trommeldurchmesser führt zu entsprechend erhöhten Produktionsgeschwindigkeiten.

**Patentansprüche**

1. Verfahren zur kontinuierlichen Herstellung von Bahnenware für das Bauwesen unter Verwendung von Formstücken, insbesondere aus thermoplastischen Kunststoffen, bei dem
   1. die Formstücke mit Hilfe einer Schüttvorrichtung auf einer kontinuierlichen Transportvorrichtung zu einer Schicht mit weitgehend konstanter Schichthöhe geschüttet,
   2. die Formstückschicht vorgewärmt,
   3. die vorgewärmte Formstückschicht unter Wärme- und Druckeinwirkung zu einer homogenen Bahn verdichtet

4. und die verdichtete, homogene Bahn unter Druckeinwirkung abgekühlt wird,

dadurch gekennzeichnet, daß

5. während des Verdichtungsvorgangs sowie während der Abkühlung ständig ein jeweils weitgehend gleichmäßiger und konstanter Druck auf die Bahn ausgeübt wird und daß anschließend

6. eine oberflächennahe Schicht der abgekühlten Bahn entfernt wird.

2. Verfahren nach Anspruch 1, dadurch gekennzeichnet, daß die Formstückschicht durch entsprechende Erwärmung zu einer zusammenhängenden, transportfähigen Bahn vorgesintert wird.

3. Verfahren nach Anspruch 2, dadurch gekennzeichnet, daß die vorgesinterte Bahn eine mittlere Temperatur von 130°C bis 180°C, vorzugsweise von 150°C bis 170°C aufweist.

4. Verfahren nach einem der Ansprüche 1 bis 3, dadurch gekennzeichnet, daß die Formstücke eine verschiedene geometrische Formgebung und/oder eine unterschiedliche Größe in Dicke, Länge und Umfang haben.

5. Verfahren nach einem der Ansprüche 1 bis 4, dadurch gekennzeichnet, daß die Formstücke in sich gemustert sind.

6. Verfahren nach einem der Ansprüche 1 bis 5, dadurch gekennzeichnet, daß die Schichtung der Formstücke auf der kontinuierlichen Transportvorrichtung mittels einer reversierenden Fördereinrichtung erfolgt.

7. Verfahren nach einem der Ansprüche 1 bis 6, dadurch gekennzeichnet, daß die reversierende Fördereinrichtung von einer über dessen Breite changierenden weiteren Fördereinrichtung beschickt wird.

8. Verfahren nach einem der Ansprüche 1 bis 7, dadurch gekennzeichnet, daß die Formstückschicht vor dem Vorwärmen bzw. Vorsintern mechanisch egalisiert und vorverdichtet wird.

9. Verfahren nach einem der Ansprüche 1 bis 8, dadurch gekennzeichnet, daß das Vorwärmen bzw. Vorsintern der Formstückschicht durch Wärmeeinwirkung des beheizten Transportbandes der kontinuierlichen Transportvorrichtung und/oder durch Wärmeeinwirkung von oben erfolgt.

10. Verfahren nach einem der Ansprüche 1 bis 8, dadurch gekennzeichnet, daß das Vorwärmen bzw. Vorsintern der Formstückschicht durch ein elektromagnetisches Wechselfeld im Inneren der Formstücke erfolgt.

11. Verfahren nach einem der Ansprüche 1 bis 10, dadurch gekennzeichnet, daß ein Mitläuferband, insbesondere ein Aramid-Gewebe, zwischen der kontinuierlichen Transporteinrichtung und der Formstückschicht eingeführt wird, des nach dem Abkühlen der verdichteten Bahn von dieser abgezogen wird.

12. Vorrichtung zur Durchführung eines der Verfahren nach einem der Ansprüche 1 bis 11, mit einer Doppelbandpresse zum Verdichten der vorgewärmten bzw. vorgesinterten Bahn und zum anschließenden Abkühlen der verdichteten Bahn unter Druckeinwirkung, dadurch gekennzeichnet, daß die Doppelbandpresse (9) zwei endlose Metallbänder (91, 92) aufweist, wobei die Metallbänder (91, 92) jeweils um Umlenkwalzen (93, 98) geführt werden und über einen bestimmten Bereich ihrer Länge zwischen sich die vorgewärmte bzw. vorgesinterte Bahn (10) halten, wobei ferner die Metallbänder (91, 92) zusammen mit der zwischenliegenden Bahn um eine beheizte Behandlungstrommel (94) und anschließend um eine Kühltrommel (95) geführt werden und wobei ferner beide Metallbänder (91, 92) unter einer solchen Zugspannung stehen, daß jeweils ein weitgehend gleichmäßiger und konstanter Druck auf die Bahn ausgeübt wird.

13. Vorrichtung gemäß Anspruch 12, dadurch gekennzeichnet, daß das Metallband (92), welches bei der beheizten Behandlungstrommel (94) innen und bei der Kühltrommel (95) außen geführt wird, durch eine der Umlenkwalzen (93) oder durch die beheizte Behandlungstrommel (94) angetrieben wird, während das andere Metallband (91) durch Reibschluß über die zwischenliegende Bahn indirekt angetrieben wird.

14. Vorrichtung gemäß einem der Ansprüche 12 oder 13, dadurch gekennzeichnet, daß die Metallbänder eine Dicke zwischen 1 und 2 mm aufweisen.

## Revendications

1. Procédé pour fabriquer en continu un matériau en bande pour le bâtiment en utilisant des pièces moulées, notamment en matières thermoplastiques, dans lequel

1. à l'aide d'un déverseur, les pièces moulées sont versées en vrac, en une couche de hauteur sensiblement constante, sur un dispositif transporteur continu;

2. la couche de pièces moulées est préchauffée;

3. la couche de pièces moulées préchauffée est comprimée en une bande de matériau continue par application de chaleur et de pression; et

4. la bande de matériau, comprimée et homogène, est refroidie tout en étant soumise à une pression; caractérisé par le fait que

5. au cours de la compression ainsi que du refroidissement, une pression sensiblement uniforme et constante est exercée sur la bande de matériau; puis

6. une couche proche de la surface de la bande de matériau refroidie est enlevée.

2. Procédé selon revendication 1, caractérisé par le fait que la couche de pièces moulées est préfrittée, par un chauffage approprié, pour constituer une bande de matériau d'un seul tenant, apte au transport.

3. Procédé selon revendication 2, caractérisé par le fait que la bande de matériau préfrittée présente une température moyenne de 130°C à 180°C, de préférence de 150°C à 170°C.

4. Procédé selon l'une des revendications 1 à 3, caractérisé par le fait que les pièces moulées ont des formes diverses et/ou des valeurs d'épaisseur, longueur et périmètre diverses.

5. Procédé selon l'une des revendications 1 à 4, caractérisé par le fait que les pièces moulées présentent un motif géométrique.

6. Procédé selon l'une des revendications 1 à 5, caractérisé par le fait que la mise en couche des pièces moulées sur le dispositif transporteur continu s'effectue au moyen d'un dispositif transporteur réversible.

7. Procédé selon l'une des revendications 1 à 6, caractérisé par le fait que le dispositif transporteur réversible est chargé par un autre dispositif transporteur mobile en va-et-vient sur sa largeur.

8. Procédé selon l'une des revendications 1 à 7, caractérisé par le fait que la couche de pièces moulées est égalisée et précomprimée mécaniquement avant le préchauffage ou le préfrittage.

9. Procédé selon l'une des revendications 1 à 8, caractérisé par le fait que le préchauffage ou préfrittage des pièces moulées s'effectue par action thermique de la bande transporteuse chauffée que comporte le dispositif transporteur continue et/ou par action de chaleur apportée par le haut.

10. Procédé selon l'une des revendications 1 à 8, caractérisé par le fait que le préchauffage ou préfrittage de la couche de pièces moulées s'effectue à l'intérieur des pièces moulées, au moyen d'un champ électromagnétique alternatif.

11. Procédé selon l'une des revendications 1 à 10, caractérisé par le fait qu'une bande conjointe, notamment un tissu d'aramide, est insérée entre le dispositif transporteur continu et la couche de pièces moulées, et est séparée de la bande de matériau comprimée, après refroidissement de cette dernière.

12. Dispositif de mise en oeuvre de l'un des procédés selon les revendications 1 à 11, comportant une double presse à bande pour comprimer la bande de matériau préchauffée ou préfrittée, et pour refroidir ensuite, sous pression, cette bande de matériau comprimée, caractérisé par le fait que la double presse à bande (9) présente deux bandes métalliques sans fin (91, 92) qui passent chacune sur des cylindres de renvoi (93, 98) et maintiennent entre elles, sur une étendue déterminée de leur longueur, la bande préchauffée ou préfrittée (10), les bandes métalliques (91, 92) passant en outre, conjointement avec la bande de matériau située entre elles, sur un tambour de traitement chauffé (94) puis sur un tambour refroidisseur (95), les deux bandes métalliques (91, 92) se trouvant soumises à une tension mécanique telle qu'une pression sensiblement uniforme et constante soit à chaque fois exercée sur la bande de matériau.

13. Dispositif selon revendication 12, caractérisé par le fait que la bande métallique (92) dont le côté intérieur passe sur le tambour de traitement chauffé (94) et le côté extérieur passe sur le tambour refroidisseur (95) est entraînée par l'un des cylindres de renvoi (93) ou par le tambour de traitement chauffé (94), tandis que l'autre bande métallique (91) est entraînée indirectement par liaison de frottement par l'intermédiaire de la bande de matériau interjacente.

14. Dispositif selon l'une des revendications 12 ou 13, caractérisé par le fait que les bandes métalliques présentent une épaisseur comprise entre 1 et 2 mm.

**Claims**

1. Method for the continuous production of webs for the building industry with use of moulded pieces, more particularly made of thermoplastic plastics materials, by which
   1. the moulded pieces are poured with the aid of a pouring apparatus on a continuous transportation apparatus to form a layer with largely constant layer height,
   2. the moulded piece layer is pre-heated,
   3. the pre-heated moulded piece layer is compressed under the action of heat and pressure to form a homogeneous web,
   4. and the compressed, homogeneous web is cooled under the action of pressure,
   characterised in that
   5. during the compression process and also during the cooling, a pressure, which, in each case, is largely uniform and constant, is continuously exerted on the web and in that subsequently
   6. a layer of the cooled web close to the surface is removed.

2. Method according to claim 1, characterised in that the moulded piece layer is pre-sintered by means of corresponding heating to form a coherent, transportable web.

3. Method according to claim 2, characterised in that the pre-sintered web has an average temperature of 130°C to 180°C, preferably of 150°C to 170°C.

4. Method according to one of the claims 1 to 3, characterised in that the moulded pieces have a different geometric shaping and/or a differing size in terms of thickness, length and periphery.

5. Method according to one of the claims 1 to 4, characterised in that the moulded pieces are patterned per se.

6. Method according to one of the claims 1 to 5, characterised in that the layering of the moulded pieces on the continuous transportation apparatus takes place by means of a reversing conveying device.

7. Method according to one of the claims 1 to 6, characterised in that the reversing conveying device is fed by a further conveying device which executes a traverse motion over the latter's width.

8. Method according to one of the claims 1 to 7, characterised in that the moulded piece layer is mechanically levelled and pre-compressed before the pre-heating or pre-sintering respectively.

9. Method according to one of the claims 1 to 8, characterised in that the pre-heating or pre-sintering of the moulded piece layer takes place by means of heat action of the heated transportation band of the continuous transportation apparatus and/or by means of heat action from above.

10. Method according to one of the claims 1 to 8, characterised in that the pre-heating or pre-sintering of the moulded piece layer takes place within the moulded pieces by means of an electromagnetic alternating field.

11. Method according to one of the claims 1 to 10, characterised in that a backing band, more particularly an arylamide woven fabric, is introduced between the continuous transportation device and the moulded piece layer and, after the compressed web has been cooled, the backing band is drawn off from the latter.

12. Apparatus for carrying out one of the methods according to one of the claims 1 to 11, having a double band press for the compression of the pre-heated or pre-sintered web and for the subsequent cooling of the compressed web under the action of pressure, characterised in that the double band press (9) has two continuous metal bands (91, 92), with the metal bands (91, 92) each being guided about deflection rollers (93, 98) and holding the pre-heated or pre-sintered web (10) between them over a certain extent of their length, with, furthermore, the metal bands (91, 92) being guided together with the web lying between them around a heated treatment drum (94) and subsequently about a cooling drum (95) and with, furthermore, both metal bands (91, 92) being under such tensile stress that a largely uniform and constant pressure is exerted by each on the web.

13. Apparatus according to claim 12, characterised in that the metal band (92), which is guided on the inside in the case of the heated treatment drum (94) and on the outside in the case of the cooling drum (95), is driven by one of the deflection rollers (93) or by the heated treatment drum (94), whilst the other metal band (91) is indirectly driven by means of frictional engagement by way of the web lying between them.

14. Apparatus according to one of the claims 12 or 13, characterised in that the metal bands have a thickness between 1 and 2 mm.